# EUROPEAN PATENT APPLICATION

(11) **EP 1 520 751 A1**
(43) Date of publication of application: **06.04.2005**
(21) Application number: 03103637.9
(22) Date of filing: 01.10.2003
(51) Int. Cl.: B60R 1/10

(54) **Vehicle comprising a side view mirror located inside the vehicle and a kit comprising such a mirror**

(71) Applicant: Defesche, Casper Johannes Camille, 6268 ND Bemelen (NL)
(72) Inventor: Defesche, Casper Johannes Camille, 6268 ND Bemelen (NL)
(74) Representative: Aalbers, Arnt Reinier

(57) **Abstract**

The invention pertains to a vehicle (1), such as a car, lorry, motorcycle, helicopter or the like, comprising a side window (5) and at least one mirror (6) for side viewing, which mirror (6) is located at least partly inside the vehicle (1). The side window (5) is optically coupled with an optical element (9) or optically adapted to direct light incident on the outside surface of the side window (5) at angles of less than 90° towards the side mirror (6), which in turn is positioned to reflect the light to a driver viewing position. The invention further relates to a kit for use in the said vehicle (1). The vehicle and kit according to the present invention provide an inside side view mirror which exhibits a relatively large viewing angle.

## Description

The invention relates to a vehicle, such as a car, lorry, motorcycle, helicopter or the like, comprising a side window and at least one mirror for side viewing, which mirror is located at least partly inside the vehicle. The invention further pertains to a kit for use in the said vehicle.

A car of the kind is known from US 5,235,469, in which document it is explained that exterior side view mirrors cause injuries or worse each year by impact on both moving and stationary vehicles. An unknown number of accidents also are understood to occur because of the limited viewing capacity provided by such mirrors. Side view mirrors are also said to be disadvantageous in the amount of aerodynamic drag attributed to these devices. In part because of the lost fuel economy, car manufacturers use side view mirrors today, which are much smaller than those employed on far older vehicles.

US 5,235,469 is directed to horizontal cut, stepped mirrors used on or near one or both of the side pillars of a windscreen on a vehicle. The stepped mirror is arranged to act as a side view mirror giving a side view image. The pillars associated with the sides of the windscreen on a vehicle are generally mounted inclined to the vertical to frame the front windshield and support the roof. These pillars are necessary but obstruct the view of the driver. Adding such mirrors to the pillars can provide side views and use of pillar area as a useful side viewing area.

By being located on the pillars, the mirrors may be designed so as not to stick outwardly from the vehicle to pose a danger to others and create aerodynamic drag. Even if located on the exterior of the vehicle, aerodynamic drag is reduced by the stepped design following the angular contour of the pillars.

However, the use of a stepped mirror may render the reflected image unclear and, also, the viewing angle of this mirror is limited.

It is an object of the present invention to improve the mirror described in the opening paragraph.

To this end, the mirror according to the present invention is characterised in that the side window is optically coupled with an optical element or optically adapted to direct, preferably focus, light incident on the outside surface of the side window at angles of less than 90° towards the side mirror, which in turn is positioned to reflect the light to a driver viewing position.

With such an arrangement, it appeared possible to obtain a relatively clear image and a relatively large viewing angle.

It is preferred that the refractive index of the material of the side window or the element varies over its thickness and increases towards the outer surface of the side window.

In a first preferred embodiment the refractive index varies gradually over at least part of the said thickness. This can be achieved e.g. by means of a dopant that changes the refractive index of the material of the side window or the said element and gradually varying the concentration of the dopant over the said thickness.

In a second preferred embodiment, the side window or the element comprises a sheet of a first material provided with at least one layer of a material having a refractive index different from the refractive index of the first material. If the at least one layer is provided on respectively the outer or the inner surface of the sheet, the at least one layer should have a refractive index respectively higher or lower than that of the sheet.

In an alternative embodiment, the window or element for focussing light onto the mirror comprises a lens, preferably located inside the vehicle or integrated in the side window. Examples of such lenses are respectively a cylindrical plane concave lens and a *Fresnel* lens.

The kit according to the present invention comprises at least one mirror to be positioned inside the vehicle, e.g. on the A pillar or on the dashboard of a car, and a side window or an optical element for directing, preferably focussing, light onto the mirror.

The invention will now be explained in more detail and with reference to the drawings, which depict preferred embodiments according to the present invention.

Figures 1 and 2 schematically show a top view and a side view of a car according to the present invention.

Figure 3 schematically shows a top view of another arrangement according to the present invention comprising a mirror and an element for focussing light onto the mirror.

Figure 4 schematically shows a top view of a further arrangement.

Figure 5 schematically shows a top view of a device wherein a mirror is integrated in an element for focussing light.

Figures 6 and 7 schematically show a side view and a top view of a car equipped with the device according to figure 5.

Figures 8 and 9 schematically show two halved top views illustrating a further advantage of the present invention.

Identical elements and features as well as elements and features performing the same or substantially the same function are denoted by the same numeral.

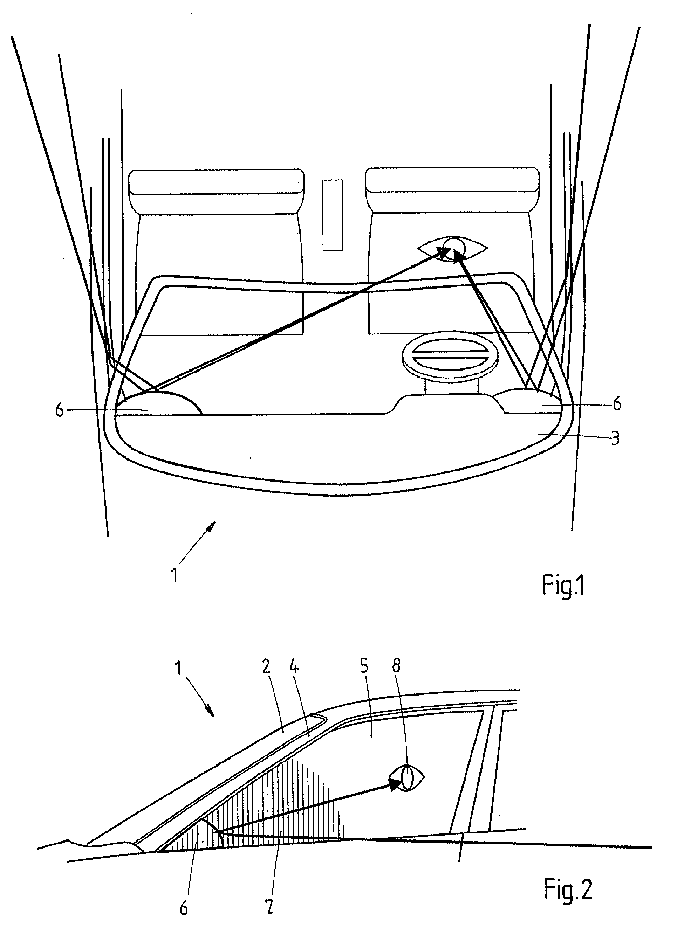

Figures 1 and 2 schematically show a top view and a side view of a car 1 according to the present invention, comprising a windscreen 2, a dashboard 3, two so-called A-pillars 4 on either side of the windscreen 2, and side windows 5. Convex mirrors 6 are located on the dashboard 3 next to the respective pillars 4. Each of the side windows 5 is provided with a refractive zone 7 to direct light (indicated by arrows) incident on the outside surface of the respective side window 5 at angles of less than 90° towards the respective convex side mirror 6. The mirrors 6 reflect the light to a driver viewing position 8, i.e. a region from where a driver can view the mirrors 6. In this particular example, the refractive zones 7 were obtained by applying a coating to the outer surface of each of the side windows. The coating is transparent to visible light and has a refractive index significantly higher than that of the glass of the side windows 5. A suitable coating material is e.g. titanium oxide and preferably has a thickness in a range from 0.05 to 5 mm, e.g. 1 mm. Instead of a single coating layer, it is also possible e.g. to provide a stack of several coating layers on the side windows 5, with different refractive indices increasing towards the outer surface of such windows or to employ glass or synthetic material having a gradually changing refractive index.

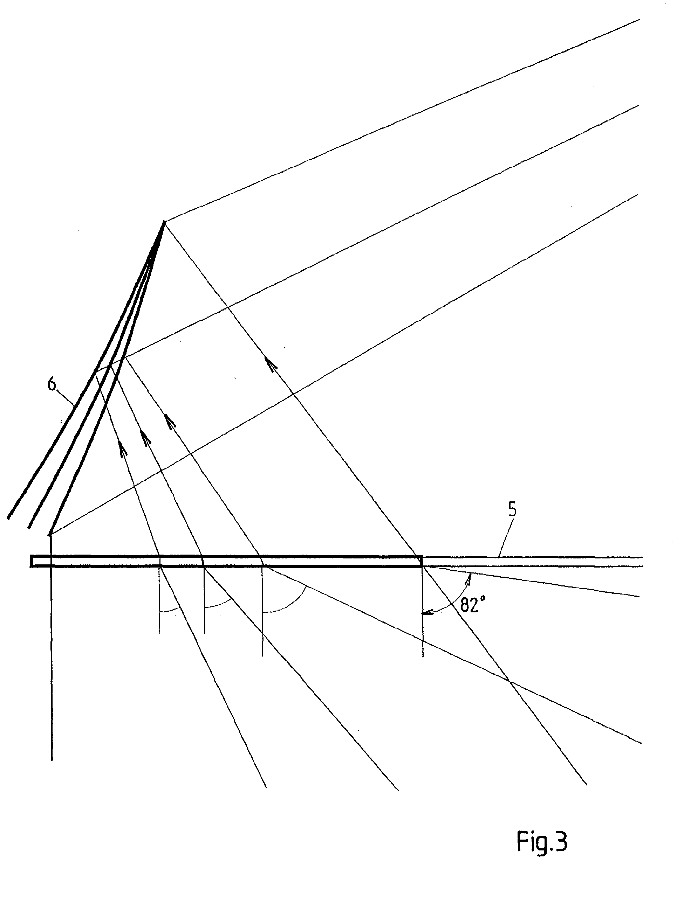

Figure 3 schematically shows a top view of similar arrangement according to the present invention comprising a (left) mirror 6, depicted in thee different positions, having a radius of 470 mm and a straight (left) side window 5 provided with an outer and anti-reflective coating of titanium oxide. As can be seen in this figure, light incident at an entry angle of about 82°, indicative of an image in the blind spot of a typical car, exits at an angle of about 37°. Light incident at an angle of about 17° exits at an angle of about 10°. Light is thus focussed onto the mirror, which reflects the light towards the driver viewing position. In this example, the centre of the region that qualifies as driver viewing position is located at a distance of about 45 cm to right of the mirror and about 65 cm rearwards. The centre of the region is typically located in a range from 20 to 50 cm upwards. If curved side windows are used, the shape of the mirrors should of course be adapted accordingly.

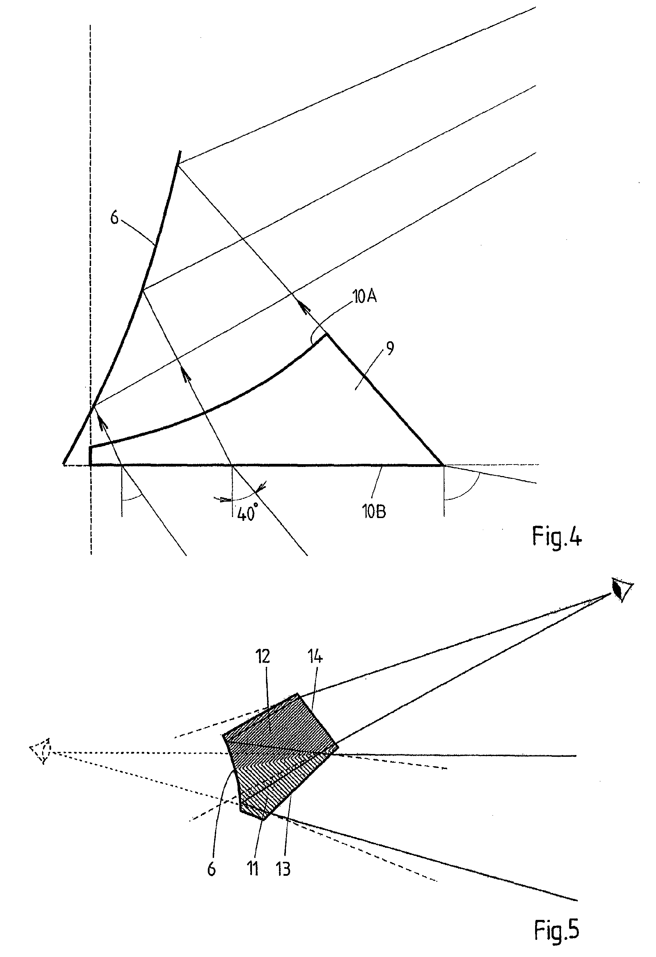

Figure 4 schematically shows a top view of a further arrangement comprising a (left) mirror 6 having a radius of 500 mm, a straight, non-coated (left) side window 5 (not shown), and an optical element, in this case a plane concave lens 9. The lens 9 comprises a curved surface 10A, e.g. having a radius of 223 mm, and a flat surface 10B, which is positioned parallel to and optically coupled with the inner surface of the side window. As can be seen in this figure, light incident at an angle of about 80°, again indicative of an image in the blind spot of a typical car, exits at an angle of about 40°. Light incident at an angle of about 40° exits at an angle of about 25°. Light is thus focussed onto the mirror 6, which reflects the light towards the driver viewing position. Instead of employing a plane concave lens 9, other lenses, such as a *Fresnel* lens mounted on or next to side window or forming an integral whole with the side window, are also suitable.

Figure 5 schematically shows a top view of a device 10, wherein the mirror 6 is integrated in the element for directing/focussing light. The device 10 comprises two components 11, 12 of Perspex having a refractive index of about 1.3 and respective inclined entry and exit surfaces 13, 14. A first component 11 is located on the outside of the side window. A second component 12 is located on the inside of the side window and in register with the first component 11. Light entering the first component 11 is directed through the side window and towards the mirror 6, reflected and, via the exit surface 14 of the second component 12, directed to the driver viewing position 8.

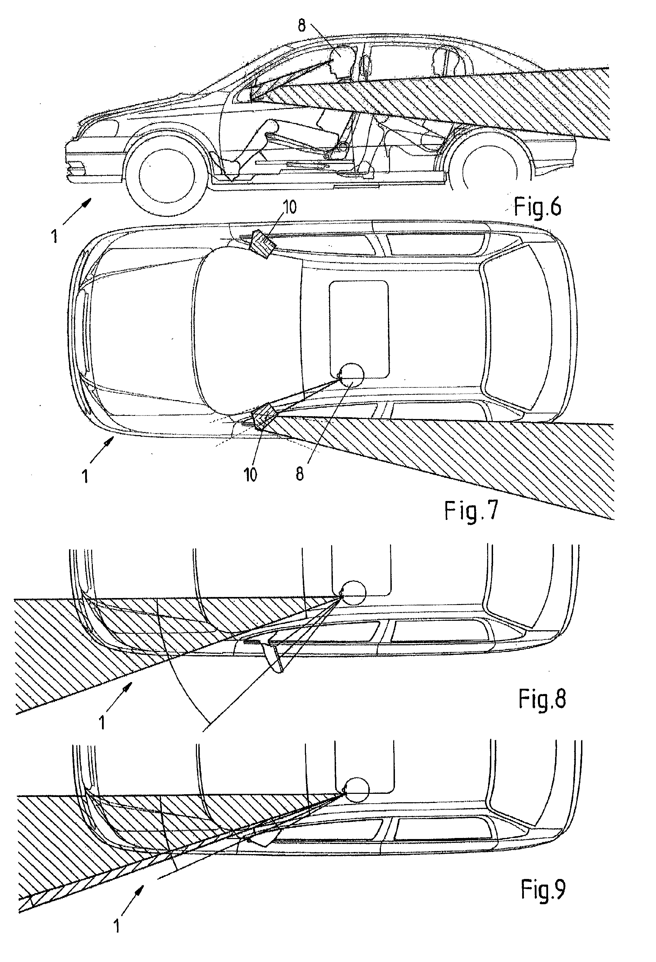

Figures 6 and 7 schematically show a side view and a top view of a car 1 equipped with this device and illustrate how a driver can view the so-called blind spot of the car 1. Figures 8 and 9 further illustrate that a driver can much faster look in the side mirror according to the present invention than in an common side mirror, i.e. the driver needs barely moved his head of shift his eyes.

From the explanations above, it will be clear that the vehicle and kit according to the present invention provide an inside side view mirror which exhibits a relatively large viewing angle also enabling, depending on the exact configuration, observing objects next to and/or almost behind the car. Further, a stepped mirror or the like is in principle not required and a clearer image can thus be obtained.

The invention is not restricted to the above-described embodiments, which can be varied in a number of ways within the scope of the claims. For instance, in addition to a varying the refractive index over the thickness of the side window the refractive index can also be varied in the longitudinal direction, i.e. the driving direction. It is further preferred that at least the mirror is provided with means for adjusting its position and/or inclination.

## Claims

1. Vehicle (1), such as a car, lorry, motorcycle, helicopter or the like, comprising a side window (5) and at least one mirror (6) for side viewing, which mirror (6) is located at least partly inside the vehicle (1), **characterised in that** the side window (5) is optically coupled with an optical element (9) or optically adapted to direct light incident on the outside surface of the side window (5) at angles of less than 90° towards the side mirror (6), which in turn is positioned to reflect the light to a driver viewing position.

2. Vehicle (1) according to claim 1, wherein the side window (5) is optically coupled with an optical element (9) or optically adapted to focus light onto the side mirror (6).

3. Vehicle (1) according to claim 1 or 2, wherein the refractive index of the material of the side window (5) or the element (9) varies over its thickness and increases towards the outer surface of the side window (5).

4. Vehicle (1) according to claim 3, wherein the refractive index varies gradually over at least part of the said thickness.

5. Vehicle (1) according to claim 3, wherein the side window (5) or the element (9) comprises a sheet (5) of a first material provided with at least one layer of a material having a refractive index different from the refractive index of the first material.

6. Vehicle (1) according to claim 1 or 2, wherein the mirror (6) is integrated in the optical element (9; 11, 12) .

7. Vehicle (1) according to any one of the preceding claims, wherein the refractive index of the side window (5) or element (9) varies in the longitudinal direction.

8. Vehicle (1) according to any one of the preceding claims, wherein the side window (5) or element (9) for focussing light onto the mirror (6) comprises a lens, preferably located inside the vehicle (1) or integrated in the side window (5).

9. Vehicle (1) according to any one of the preceding claims, wherein the mirror (6) is convex and has a radius or radii in a range from 250 to 1000 mm.

10. Kit for use in a vehicle (1) according to any one of the preceding claims, comprising at least one mirror (6) to be positioned inside the vehicle, e.g. on an A-pillar (4) or on the dashboard (3), and a side window (5) or an optical element (9) for directing light onto the mirror (6).

11. Kit according to claim 10, wherein the refractive index of the material of the side window (5) or the element (9) varies over its thickness and increases towards the outer surface of the side window (5).

12. Device (10) for use in a vehicle (1) according to any one of the claims 1-9, comprising at least one mirror (6) and an optical element (9; 11, 12) for directing light onto the mirror (6), wherein the mirror (6) is integrated in the element (9; 11, 12).
